# EUROPEAN PATENT SPECIFICATION

(11) **EP 0 662 887 B1**
(45) Date of publication and mention of the grant of the patent: **20.08.1997**
(21) Application number: 93922901.9
(22) Date of filing: 07.10.1993
(51) Int. Cl.: B60S 3/04

(54) **A CAR WASH**
AUTOWASCHANLAGE
TUNNEL DE LAVAGE POUR VOITURES

(30) Priority: 07.10.1992 DK 1233/92
(43) Date of publication of application: 19.07.1995
(73) Proprietor: A/S DANSK SHELL, 1604 Copenhagen V (DK)
(72) Inventor: JENSEN, Bent, DK-3070 Snekkersten (DK); KNUDSEN, Claus, DK-3650 Ölstykke (DK); KNUDSEN, Arne, DK-3650 Ölstykke (DK); KELDMANN, Erik, DK-5250 Odense SV (DK)
(74) Representative: Siiger, Joergen
(86) International application number: DK9300330
(87) International publication number: WO9407713

(56) References cited:
- DE-B- 2 930 854
- DE-C- 3 108 248
- FR-A- 2 660 611
- US-A- 2 857 921
- US-A- 3 391 701
- US-A- 4 830 033

## Description

### Technical Field

The invention relates to a vehicle wash, especially for cars, and comprising a portal-shaped member which can be moved relative to a vehicle, as well as horizontal and vertical, rotatable brushes and driving means for moving the horizontal brush along the contour of the vehicle, where said wash further comprises units for washing the wheels of the vehicle, said units comprising a nozzle optionally scanning in horizontal direction.

### Background Art

In the known car washes, the wheels of the cars are washed by means of rotatable brushes, confer for instance DE-A-23 15 466. These brushes are not able to penetrate into all cavities in the rims, and the washing is not completely satisfying.

US.-A-4,985,957 discloses a car wash comprising units for washing the wheels of the car. These wheel washing units comprise a number of spray nozzles displaceable in horizontal direction at a speed corresponding to the advancing speed of the car.

EP-A-0 338 509 discloses a wheel washing system. The wheel is removed and washed in a separate washing chamber in which the wheel rim is scavenged by means of a spray nozzle. This spray nozzle may be movable relative to the wheel rim.

### Brief Description of the Invention

The object of the invention is to provide a car wash system of the above type where the washing of each wheel is more efficient than previously known.

The car wash according to the invention is characterised in that the wheel washing units in addition can be moved upwards or downwards by means of a linkage mechanism and a timer, said linkage mechanism comprising a first and a second link bar, said link bars at their one ends being pivotally secured to a substantially vertical post of the portal-shaped member and at their opposite ends being rotatably secured to a member supporting the nozzle, the second link bar being retractable or extendable so that the angular position of the supporting member with respect to the first and the second link bars can be changed, said timer also adjusting the length of the second link bar in response to the movement being upward or downward so as to adjust the angular position of the nozzle. The downward orientation of the nozzle during a downward movement and the upward orientation thereof during an upward movement provides a washing which is more efficient than previously known.

Moreover, the upward movement may according to an embodiment of the invention be provided by means of at least one rotatably journalled link bar supporting the nozzle optionally through a rotatably journalled supporting member and communicating with a rotatable disk through a further link bar.

Furthermore according to an embodiment of the invention the means determining the angular position of the nozzle may be composed of an additional link bar pivotally secured to the supporting member of the nozzle, a pneumatic or hydraulic cylinder for changing the length of the additional link bar being inserted in said link bar.

In addition according to an embodiment of the invention, means may be provided in connection with the rotatable disk, said means being adapted to guide the cylinder on the basis of the angular position of the disk in order to change the length of the additional link bar in response to the angular position of the disk.

Moreover according to an embodiment of the invention the disk may across a considerably portion of its periphery be coated with a material detectable by sensors to indicate the angular position of the disk. As a result, the angular position of the disk is detected in a particularly simple manner.

The vertical movement may alternatively be provided by means of a pneumatic or hydraulic cylinder with a throttling, said cylinder communicating with the rotatably arranged link bar supporting the nozzle through the supporting member of said nozzle.

### Brief Description of the Drawing

The invention is described in greater detail below with reference to the accompanying drawing, in which
Fig. 1 illustrates a car wash with a known wheel washing unit,
Fig. 2 illustrates a car wash with a wheel washing unit according to the invention,
Fig. 3 illustrates on a larger scale the wheel washing unit of Fig. 2,

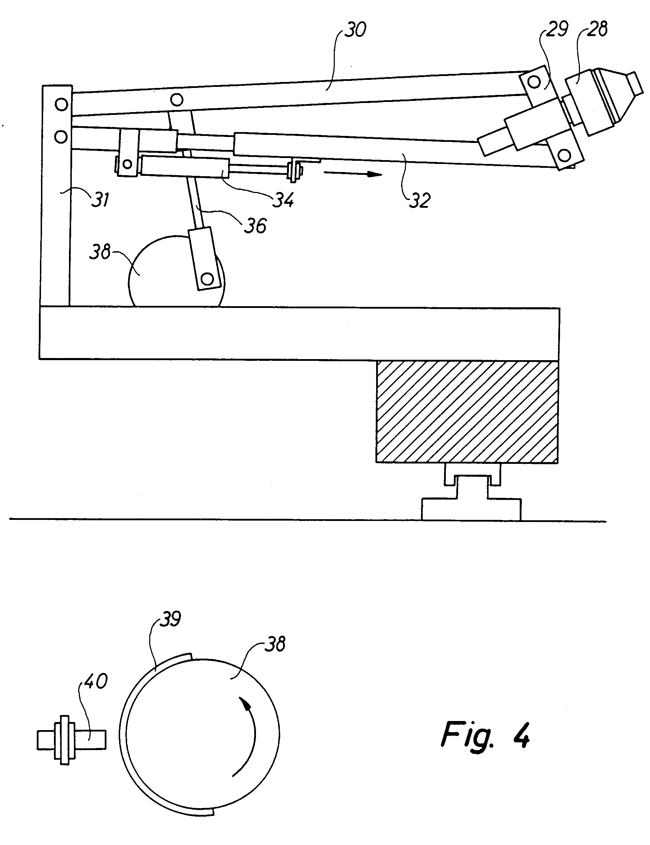

Fig. 4 illustrates the wheel washing unit at a higher position during the upward movement,

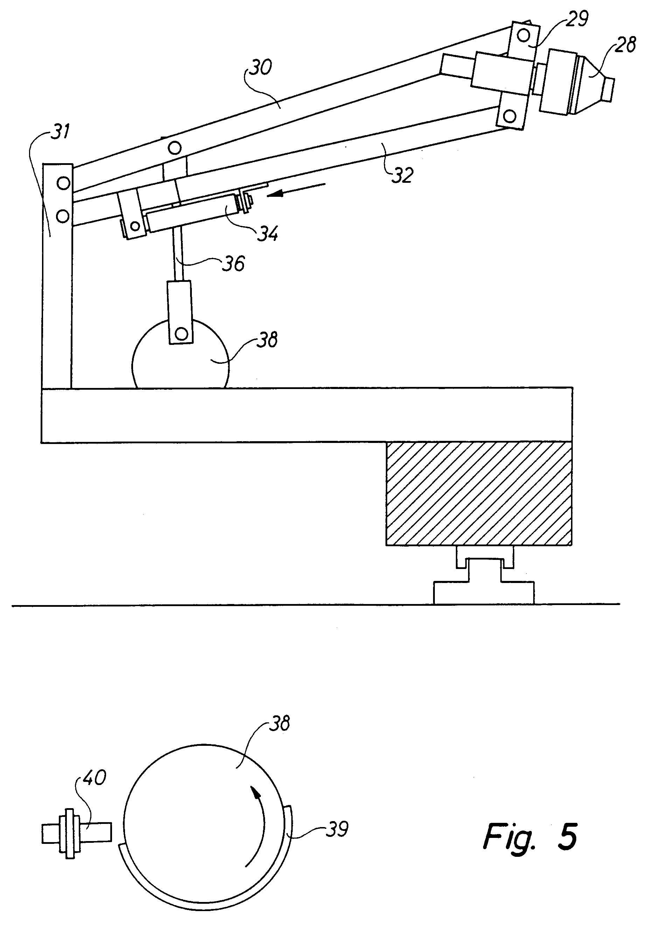

Fig. 5 illustrates the top position of the wheel washing unit,

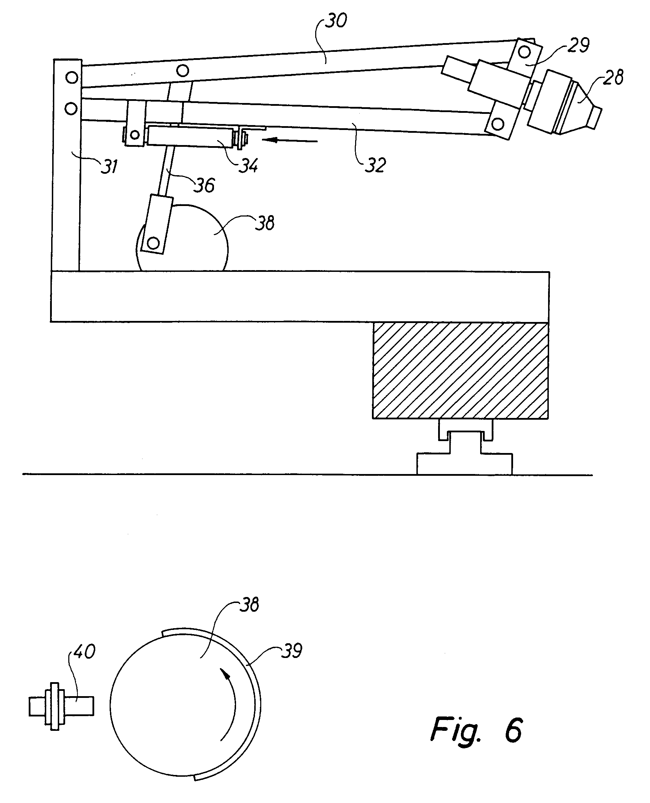

Fig. 6 illustrates the wheel washing unit in a lower position during the downward movement,
Fig. 7 illustrates a link bar mechanism allowing a horizontal tilting of the nozzle, and
Fig. 8 illustrates another rotatable disk controlling several functions, such as the tilting of the nozzle.

### Best Mode for Carrying Out the Invention

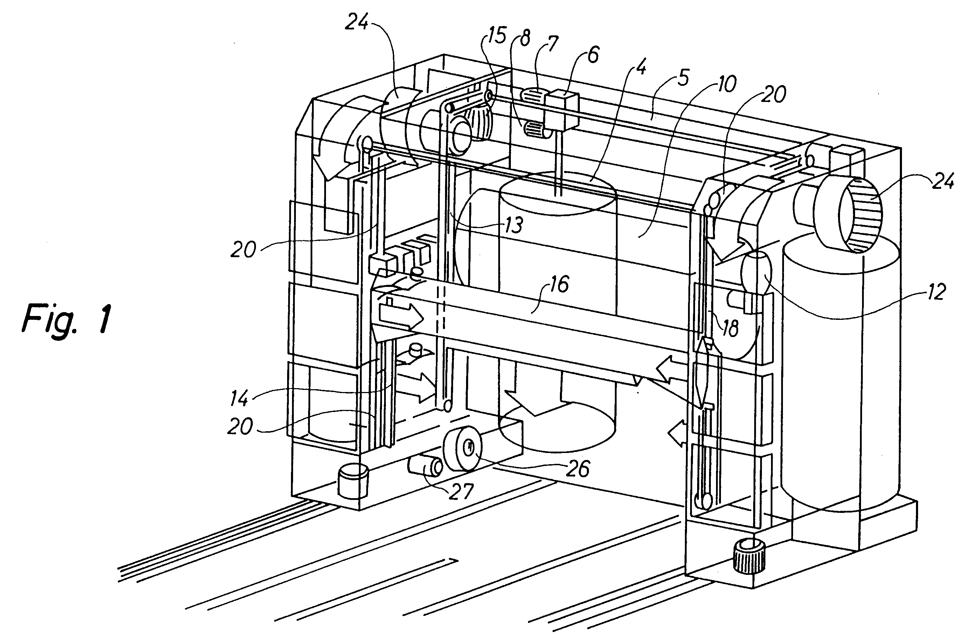

The vehicle wash, especially for cars, shown in Fig. 1 comprises a portal-shaped member 2 capable of passing across a stopped vehicle. Vertical, downward side brushes 4 are secured to the portal-shaped member 2, said brushes 4 being movable by means of moving means 6 along a horizontal guide 5 in the portion thereabove of the portal-shaped member 2. Each moving means 6 is associated with two motors 7, 8, one motor guiding the movement to the side of said moving means and the other motor rotating the brush 4. Furthermore, a horizontal roof brush 10 is provided which is associated with a driving motor 12. The horizontal roof brush 10 can be moved up- and downwards by means of a driving belt 13 controlled by another motor 15. Drying from the side is performed by means of drying air fed through vertical columns 14 in the vertical portions of the portal-shaped member 2. Drying from above is performed by means of a roof drying means 16 arranged thereabove and comprising a through channel communicating with some downward openings for the feeding of drying air. The roof drying means 16 can be moved up- and downwards, the up- and downward movement being controlled by means of a driving belt 18 and a motor 20. The roof drying means 16 communicates with slots 20 coated with rubber plates in the vertical portions of the portal-shaped member 2. Drying air can be fed to the roof drying means 16 through these covered slots 20. Both sides of the portal-shaped member 2 is provided with a blower 24 for suction of air and feeding of air to said slots. The movement of the brushes 4, 10 and the air drying means 16 thereabove, respectively, can be controlled by means of photocells detecting the position of said brushes and said roof drying means 16 relative to the vehicle. The photocells communicate with a PLC including a program controlling the washing procedure. The portal-shaped member 2 of Fig. 1 is in each side provided with a conventional wheel washing unit in form of a rotating brush 26. The brush 26 is connected to a separate driving motor 27 also controlled by said PLC.

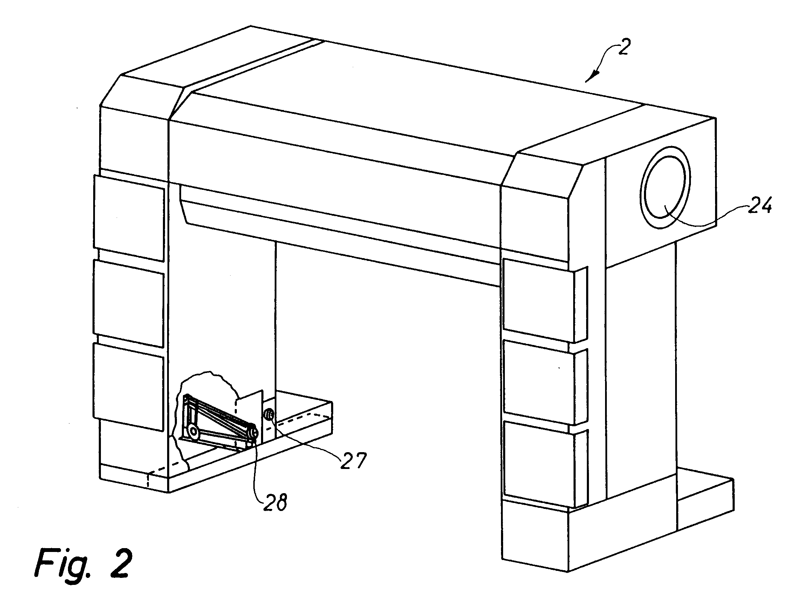

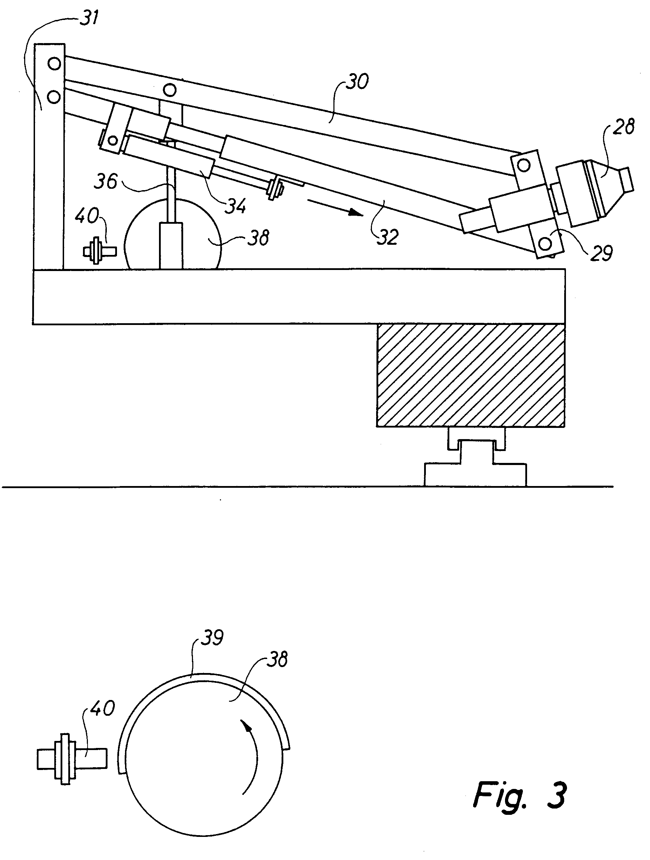

Fig. 2 illustrates a car wash with a wheel washing unit according to the invention. This wheel washing unit comprises a horizontally scanning nozzle 28, such as of the type POWER SPEED from the company KEV. The nozzle is described in detail in DK-B-No. 166,437. The wheel washing unit is illustrated on a larger scale in Fig. 3. The nozzle 28 is mounted on a supporting member 29 rotatably journalled at the end of a first link bar 30, the opposite end of which is pivotally secured to a vertical post 31 in turn secured to the bottom of the portal-shaped member 2. The nozzle 28 and the link bar 30 extend outwards through a slot-shaped opening in the portal-shaped member 2. A second link bar 32 is furthermore secured to the supporting member 29 of the nozzle 28. The second link bar 32 is also secured to the vertical post 31. The length of the second link bar 32 can be changed by means of a hydraulic or pneumatic cylinder 34, whereby the angular position of the supporting member 29 of the nozzle 28 and consequently the angular position of said nozzle 28 can be changed. The distance between the securing locations of the link bars 30, 32 on the post 31 is, however, smaller than the distance between the securing locations of said link bars 30, 32 on the supporting member 29 of the nozzle 28.

The horizontally scanning nozzle 28 can furthermore perform an up- and downward movement by means of an additional link bar 36. The additional link bar 36 is pivotally secured to the first link bar 30 at a distance from the securing location on the post 31 and communicates with a rotatable disk 38 therebelow at a location adjacent the periphery of said disk 38. The disk 38 is furthermore shown alone on a larger scale. During the rotation of the disk 38, the linkage mechanism comprising three link bars 30, 32, 36 can perform an up- and downward movement whereby the nozzle 28 can scan in up- and downward direction and simultaneously perform a horizontal scanning. During an upward movement of the linkage mechanism the nozzle 28 is facing upwards so as to provide an improved washing, and during a downward movement said nozzle 28 is facing downwards. The latter has according to the invention been rendered possible by means of a sensor 40 arranged adjacent the disk 38, said sensor being able to detect the angular position of the disk 38 and whether the linkage mechanism is moving upwards or downwards. According to a particularly advantageous embodiment, such a detection is rendered possible by one half of the periphery of the disk 38 being coated with a magnetic material 39, the sensor 40 being composed of a magnetic field sensor. The coating 39 is arranged such relative to the sensor 40 that the angular interval corresponds to the length of the rotational movement of the disk 38 while the linkage mechanism is moved upwards. During this movement, the sensor 40 can emit a signal activating the cylinder 34 in such a manner that the length of the second link bar 32 is increased and the nozzle 28 faces upwards. When this signal is no longer emitted, the length of the second link bar 32 is again reduced whereby the nozzle 28 faces downwards. As the distance between the securing locations of the link bars 30, 32 on the post 31 is smaller than on the supporting member 29 of the nozzle 28, said nozzle 28 performs a slight turning during the up- and downward movement in such a manner that a maximum scavenging effect is obtained. The scavenging pressure of the liquid fed from the nozzle 28 is about 180 bar.

The entire washing procedure is as follows:

When the car entering the car wash has stopped, the portal-shaped member 2 is advanced to the car. When the front wheels of the car are detected by means of photocells, the portal-shaped member 2 stops and water of a temperature of approximately 60°C is sprayed on the wheels. The portal-shaped member 2 continues and stops about 5 sec. later in order to spray chemicals on the car. When the portal-shaped member 2 reaches the back wheels of the car, the sequence is repeated. The chemicals react during the returning movement lasting about 40 sec.

At the beginning of an ordinary washing sequence, a panel washing is started at the front end of the car at a scavenging pressure of about 90 bar. Beyond the scanning nozzle 28, a stationary nozzle 27 is provided as well, and both nozzles 27, 28 are activated during this period of the washing sequence. When the front wheels are detected, the stationary nozzle 27 is closed and the washing of each front wheel is performed as described above at a scavenging pressure of about 180 bar. Having passed the front wheel, a recouping is performed by means of the PLC into the position where both nozzles 27 and 28 are activated. The sequence is repeated at the back wheels.

A wheel washing unit is provided in both the left and the right side of the portal-shaped member 2. One nozzle 27 is stationary while the other nozzle 28 can be moved up- and downwards. The scanning angle of each nozzle is about 15° to 20°. The stationary nozzle scans in vertical direction while the movable nozzle scans in horizontal direction. The nozzles are of the type described in DK-B-No. 166,437.

During the panel washing, the movable nozzle is guided by means of the cylinder 34 in such a manner that it faces obliquely upwards. During this period of the washing sequence where both nozzles 27, 28 are activated, the pressure per nozzle drops to about 90 bar. During the washing of the wheels, the stationary nozzle 27 is closed whereby the pressure of the liquid from the movable nozzle is increased to about 180 bar. During the washing of the wheel, the angle of the nozzle head 28 is changed up and down in order both to hit the lower location, such as the rim, and to wash the rim surface from different angles.

The operations are controlled by means of the rotating disk 38, which together with the sensor 40 determine the position and angular position of the nozzle head 28. The position of the car wash relative to the car is detected by means of optical sensors in form of photocells.

The signals emitted by the sensors are transmitted to PLC controlling the washing procedure and emitting signals controlling the electric driving motors etc.

The vertical scanning can alternatively be performed by means of a pneumatic or hydraulic cylinder with a throttling, said cylinder communicating with the rotatably journalled link bar 30 supporting the nozzle 28 through a supporting member 29.

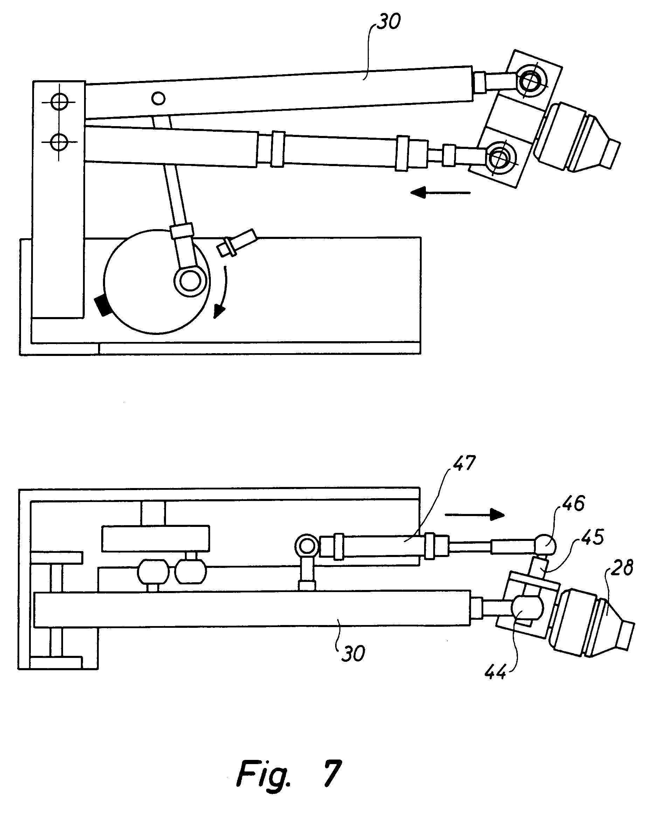

Fig. 7 illustrates an example of a linkage mechanism allowing a tilting of the nozzle 28 in horizontal direction. Such a tilting is rendered possible by the supporting member 29 of the nozzle 28 being arranged in a ball-and-socket joint 44. An arm 45 projects from the side of the rotatably arranged supporting member 29, and at the end of said arm 45 an additional ball-and-socket joint 46 is provided, a piston rod of a cylinder 47 being secured to said additional ball-and-socket joint 46. The opposite end of the cylinder 47 is secured to the link bar 30. This cylinder 47 renders it furthermore possible to change the angular position of the nozzle 28 in horizontal direction, whereby a very efficient washing of the wheel is obtained.

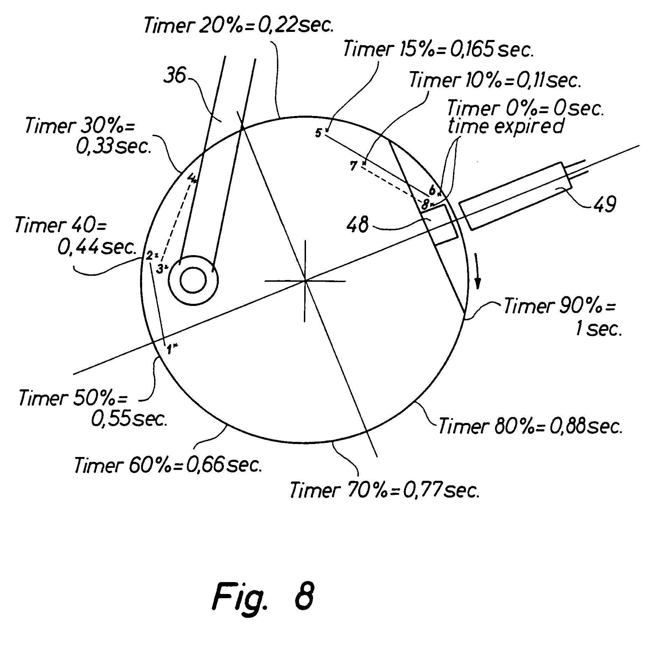

Fig. 8 illustrates a rotating disk operating substantially as a curve disk. A motor controls the rotation of the disk. A permanent magnet 48 is provided on the disk, and a magnetic sensor 49 or a touchless sensor is provided opposite said permanent magnet in the position illustrated in the Figure, said sensor being activated when the magnet 48 passes. As a result a timer is activated which controls the desired operations in such a manner that they start and stop in the desired moments. The timer is set at 100% corresponding to a sequence of 360° and counts backwards. In the illustrated embodiment, such a sequence corresponds to 1.10 sec. After one sequence, the magnet 48 is returned to the sensor 49. During this sequence, the timer determines the starting moments of the various operations, such as the tilting of the nozzle 28, i.e. in vertical direction, at a time corresponding to 50%. The vertical tilting starts at 50% of the sequence period and at about 40% of this period the tilting is completed as a certain reaction is required. Then the nozzle 28 faces upwards. A large wheel should, however, be distinguished from a small wheel. The tilting from 50% to 40% corresponds to a large wheel size, whereas a tilting from 40% to 30% corresponds to a small wheel size. When the nozzle 28 has been tilted upwards, the disk continues the rotation into the positions 5 and 6 or 7 and 8, respectively, shown in the Figure, where the nozzle 28 is tilted downwards. The positions 5 and 6 then correspond to one wheel size whereas the positions 7 and 8 correspond to the other wheel size. When the nozzle has been tilted downwards, the magnet 48 is positioned opposite the magnet contact 49. Then the timer is set at 100%.

It is also possible to control the vertical tilting of the nozzle by means of the disk.

## Claims

1. A vehicle wash, especially for cars, and comprising a portal-shaped member which can be moved relative to a vehicle, as well as horizontal and vertical, rotatable brushes and driving means for moving the horizontal brush along the contour of the vehicle, where said wash further comprises units for washing the wheels of the vehicle, said units comprising a nozzle (28) optionally scanning in horizontal direction, **characterised** in that the wheel washing units in addition can be moved upwards or downwards by means of a linkage mechanism (30,32,36) and a timer, said linkage mechanism comprising a first (30) and a second (32) link bar, said link bars at their one ends being pivotally secured to a substantially vertical post (31) of the portal-shaped member (2) and at their opposite ends being rotatably secured to a member (29) supporting the nozzle (28), the second link bar being retractable or extendable so that the angular position of the supporting member with respect to the first and the second link bars can be changed, said timer also adjusting the length of the second link bar in response to the movement being upward or downward so as to adjust the angular position of the nozzle (28).

2. A vehicle wash as claimed in claim 1, **characterised** in that the vertical movement is provided by means of at least one rotatably journalled link bar (30) supporting the nozzle (28) optionally through a rotatably journalled supporting member (29) and communicating with a rotatable disk (38) through a further link bar (36).

3. A vehicle wash as claimed in claim 1, **characterised** in that the means for determining the angular position of the nozzle (28) is composed of an additional link bar (32) pivotally secured to the supporting member (29) of the nozzle (28), a pneumatic or hydraulic cylinder (34) for changing the length of the additional link bar (32) being inserted in said link bar (32).

4. A vehicle wash as claimed in claim 2 or 3, **characterised** in that means (40) are provided in connection with the rotatable disk (38), said means being adapted to guide the cylinder (34) on the basis of the angular position of the disk (38) in order to change the length of the additional link bar (32) in response to the angular position of the disk (38).

5. A vehicle wash as claimed in the preceding claims 2 to 4, **characterised** in that across a considerably portion of its periphery, the disk (38) is coated with a material (39) detectable by sensors (40) to indicate the angular position of the disk (38).

6. A vehicle wash as claimed in claim 1, **characterised** in that the vertical movement is provided by means of a pneumatic or hydraulic cylinder with a throttling, said cylinder communicating with the rotatably arranged link bar (30) supporting the nozzle (28) through the supporting member (29) of said nozzle (28).

7. A vehicle wash as claimed in claim 1, **characterised** in that the angular position of the nozzle (28) is adjustable in response to the size of the wheel.

8. A vehicle wash as claimed in one or more of the preceding claims, **characterised** in that the nozzle (29) is tiltable in horizontal direction.

## Patentansprüche

1. Fahrzeugwaschanlage, insbesondere für Personenkraftwagen, mit einem portalförmigen Teil, das relativ zu einem Fahrzeug bewegt werden kann, sowie mindestens einer waagerechten und mindestens einer senkrechten drehbaren Bürste und einer Antriebseinrichtung zum Bewegen der waagerechten Bürste entlang der Kontur des Fahrzeugs, wobei die Waschanlage ferner Einheiten zum Waschen der Räder des Fahrzeugs aufweist, wobei die Einheiten eine Düse (28) aufweisen, die wahlweise in horizontaler Richtung abtastet, dadurch gekennzeichnet, daß die Radwascheinheiten zusätzlich durch einen Gelenkmechanismus (30, 32, 36) und ein Zeitglied aufwärts oder abwärts bewegt werden können, wobei der Gelenkmechanismus eine erste (30) und eine zweite Gelenkstange (32) aufweist, die Gelenkstangen an ihren einen Enden schwenkbar an einem im wesentlichen senkrechten Ständer (31) des portalförmigen Teils (2) befestigt sind und an ihren entgegengesetzten Enden drehbar an einem Teil (29) befestigt sind, das die Düse (28) stützt, die zweite Gelenkstange so einfahrbar oder ausfahrbar ist, daß die Winkelposition des Stützteils gegenüber der ersten und der zweiten Gelenkstange geändert worden kann, und das Zeitglied auch die Länge der zweiten Gelenkstange als Reaktion auf die Aufwärts- oder Abwärtsbewegung einstellt, um die Winkelposition der Düse (20) einzustellen.

2. Fahrzeugwaschanlage nach Anspruch 1, dadurch gekennzeichnet, daß die senkrechte Bewegung durch mindestens eine drehbar gelagerte Gelenkstange (30) erfolgt, die die Düse (28) wahlweise über ein drehbar gelagertes Stützteil (29) stützt und mit einer Drehscheibe (38) über eine weitere Gelenkstange (36) in Verbindung steht.

3. Fahrzeugwaschanlage nach Anspruch 1, dadurch gekennzeichnet, daß die Einrichtung zum Bestimmen der Winkelposition der Düse (28) eine zusätzliche Gelenkstange (32) aufweist, die schwenkbar an dem Stützteil (29) der Düse (28) befestigt ist, wobei ein pneumatischer oder hydraulischer Zylinder (34) zum Ändern der Länge der zusätzlichen Gelenkstange (32) in die Gelenkstange (32) eingefügt ist.

4. Fahrzeugwaschanlage nach Anspruch 2 oder 3, dadurch gekennzeichnet, daß eine Einrichtung (40) in Verbindung mit der Drehscheibe (38) vorgesehen ist, wobei die Einrichtung geeignet ist, den Zylinder (34) auf der Grundlage der Winkelposition der Scheibe (38) zu führen, um die Länge der zusätzlichen Gelenkstange (32) als Reaktion auf die Winkelposition der Scheibe (38) zu ändern.

5. Fahrzeugwaschanlage nach einem der vorhergegangenen Ansprüche 2 bis 4, dadurch gekennzeichnet, daß die Scheibe (38) über einen wesentlichen Abschnitt ihres Umfangs mit einem Material (39) beschichtet ist, das durch Sensoren (40) erfaßt werden kann, um die Winkelposition der Scheibe (38) anzuzeigen.

6. Fahrzeugwaschanlage nach Anspruch 1, dadurch gekennzeichnet, daß die senkrechte Bewegung durch einen pneumatischen oder hydraulischen Zylinder mit einer Drosselung erfolgt, wobei der Zylinder mit der drehbar angeordneten Gelenkstange (30) in Verbindung steht, die die Düse (28) über das Stützteil (29) der Düse (28) stützt.

7. Fahrzeugwaschanlage nach Anspruch 1, dadurch gekennzeichnet, daß die Winkelposition der Düse (28) als Reaktion auf die Größe des Rads einstellbar ist.

8. Fahrzeugwaschanlage nach einem oder mehreren der vorhergegangenen Ansprüche, dadurch gekennzeichnet, daß die Düse (28) in horizontaler Richtung kippbar ist.

## Revendications

1. Installation de lavage pour véhicules, en particulier pour des voitures, et comprenant un élément en forme de portique qui peut être déplacé par rapport à un véhicule, ainsi que des brosses rotatives horizontale et verticales et un moyen d'entraînement pour déplacer la brosse horizontale le long du contour du véhicule, ladite installation de lavage comprenant, en outre, des unités destinées à laver les roues du véhicule, lesdites unités comprenant une buse (28) réalisant un balayage optionnel en direction horizontale, caractérisée en ce que les unités de lavage de roues peuvent, en plus, être déplacées vers le haut ou vers le bas à l'aide d'un mécanisme de liaison articulée (30, 32, 36) et d'une horloge, ledit mécanisme de liaison articulée comprenant une première (30) et une seconde (32) tiges de liaison articulée, lesdites tiges de liaison articulée étant, à l'une de leurs extrémités, assujetties à pivotement à un montant (31) sensiblement vertical de l'élément en forme de portique (2) et, à leur extrémité opposée, assujetties à rotation à un organe (29) supportant la buse (28), là seconde tige de liaison articulée pouvant se rétracter ou s'allonger afin que la position angulaire de l'organe de support par rapport aux première et seconde tiges de liaison articulée puisse être modifiée, ladite horloge réglant aussi la longueur de la seconde tige de liaison articulée en réponse au fait que le déplacement a lieu vers le haut ou vers le bas de façon à régler la position angulaire de la buse (28).

2. Installation de lavage pour véhicules selon la revendication 1, caractérisée en ce que le déplacement vertical est assuré au moyen d'au moins une tige de liaison articulée (30) montée de façon à tourner, qui supporte la buse (28) optionnellement par l'intermédiaire d'un organe de support (29) monté de façon à tourner, et qui communique avec un disque tournant (38) par l'intermédiaire d'une autre tige de liaison articulée (36).

3. Installation de lavage pour véhicules selon la revendication 1, caractérisée en ce que le moyen pour déterminer la position angulaire de la buse (28) est composé d'une tige de liaison articulée supplémentaire (32) assujettie à pivotement à l'organe de support (29) de la buse (28), un vérin pneumatique ou hydraulique (34) destiné à modifier la longueur de la tige de liaison articulée supplémentaire (32) étant insérée dans ladite tige de liaison articulée (32).

4. Installation de lavage pour véhicules selon la revendication 2 ou 3, caractérisée en ce que des moyens (40) sont prévus en liaison avec le disque tournant (38), lesdits moyens étant aptes à guider le vérin (34) en fonction de la position angulaire du disque (38), afin de modifier la longueur de la lige de liaison articulée supplémentaire (32) en réponse à la position angulaire du disque (38).

5. Installation de lavage pour véhicules selon les revendications précédentes 2 à 4, caractérisée en ce que, sur une partie très importante de sa périphérie, le disque (38) est recouvert d'un matériau (39) détectable par des capteurs (40) pour indiquer la position angulaire du disque (38).

6. Installation de lavage pour véhicules selon la revendication 1, caractérisée en ce que le déplacement vertical est réalisé à l'aide d'un vérin pneumatique ou hydraulique comportant un étranglement, ledit vérin communiquant avec la tige de liaison articulée (30) disposée de façon à tourner, qui supporte la buse (28) par l'intermédiaire de l'organe de support (29) de ladite buse (28).

7. Installation de lavage pour véhicules selon la revendication 1, caractérisée en ce que la position angulaire de la buse (28) peut être réglée en réponse à la taille de la roue.

8. Installation de lavage pour véhicules selon une ou plusieurs des revendications précédentes, caractérisée en ce que la buse (29) peut être inclinée en direction horizontale.
